# EUROPÄISCHE PATENTSCHRIFT

(11) **EP 1 754 098 B1**
(45) Veröffentlichungstag und Bekanntmachung des Hinweises auf die Patenterteilung: **21.01.2009**
(21) Anmeldenummer: 05759517.5
(22) Anmeldetag: 04.05.2005
(51) Int. Cl.: G02C 5/22, G02C 5/16

(54) **BRILLENGESTELL MIT EINEM GELENK ZUR ANWINKELUNG DER BRILLENBÜGEL**
SPECTACLE FRAME COMPRISING A JOINT FOR BENDING THE SPECTACLE BOWS
MONTURE DE LUNETTES POURVUE D'UNE ARTICULATION SERVANT A PLIER LES BRANCHES DE LUNETTES

(30) Priorität: 28.05.2004 DE 102004027013
(43) Veröffentlichungstag der Anmeldung: 21.02.2007
(73) Patentinhaber: Mykita Studio GmbH, 10115 Berlin (DE)
(72) Erfinder: GOTTSCHLING, Harald, 10435 Berlin (DE); HAFFMANS, Philipp, 10115 Berlin (DE); KRÜGER, Moritz, 10119 Berlin (DE); HAFFMANS, Daniel, 10115 Berlin (DE)
(74) Vertreter: Schubert, Klemens
(86) Internationale Anmeldenummer: PCT/DE2005/000867
(87) Internationale Veröffentlichungsnummer: WO 2005/116727

(56) Entgegenhaltungen:
- EP-A- 0 863 424
- DE-A1- 3 805 326
- US-A- 5 367 344
- US-A1- 2004 032 564
- PATENT ABSTRACTS OF JAPAN Bd. 1998, Nr. 06, 30. April 1998 (1998-04-30) & JP 10 039261 A (FUKUI PREF GOV), 13. Februar 1998 (1998-02-13) in der Anmeldung erwähnt

## Beschreibung

Die Erfindung betrifft ein Brillengestell mit einem Gelenk zur Anwinkelung der Brillenbügel sowie ein Verfahren zur Herstellung.

Ferner betrifft die Erfindung eine Verwendung von Schnappfedern mit Knackfrosch-Effekt.

Brillen gehören zum Stand der Technik und sind in vielen Ausführungsformen bekannt. Die meisten Brillen sind mit einem Scharnier ausgestattet, dessen einer Teil am Brillenrahmen und dessen anderer Teil mit dem Brillenbügel verbunden ist. Beide Teile werden ineinander geschoben und verschraubt.

In der US 4 898 460 wird eine Brille beschrieben, bei der das Brillengestell aus einem Rohr besteht, dass an mehrren Stellen Gelenkbalgen aufweist, an denen das Rohr in eine für den Träger der Brille angepasste Form gebogen werden kann.

Ferner wird in der JP 10-039 261 A ein Brillengestell beschrieben, bei der die flexiblen Brillenbügel durch einen Federmechanismus in einer aufgeklappten Position gehalten werden.

Aufgabe der Erfindung ist eine einfach herzustellende schraubenlose Brille mit einem Gelenk zur Anwinkelung der Brillenbügel zu liefern.

Die Aufgabe wird durch ein Brillengestell gemäß Anspruch 1 gelöst.

Das Gelenk ist so konstruiert, dass es eine ebene Fläche bildet, die in einem ungefähr rechten Winkel von der frontalen Brillenfassung abgewinkelt ist. In dieser Position des maximalen Bügelaufschlagwinkels ist der Materialüberschuss auf der dem Gesicht zugewandten Seite der Ebene, die durch die Gelenkfläche gebildet wird. Wird nun der Brillenbügel zugeklappt, so dass sich der Bügelaufschlagwinkel verkleinert, so bewegt sich der Materialüberschuss in Richtung der Ebene und führt somit zu einer Arretierung des Brillenbügels in einer Position mit einem geringeren Bügelaufschlagwinkel. Dieses plötzliche Umschlagen der Brillenbügel entspricht dem "Knackfrosch-Effekt".

Wie bei den im Fasching gebräuchlichen Knackfröschen aus Blech, lässt sich lange Zeit der Druck erhöhen, bis zu einem bestimmten Punkt, dann springt das Blech in eine zweite Position. Ein ähnlicher Mechanismus ist auch bei einigen Haarklammern gebräuchlich.

Der Brillenbügel weist vorzugsweise an einem Ende eine Fläche auf, die einen Materialüberschuss auf einer Seite der Fläche aufweist. Dieser Materialüberschuss bildet das Gelenk der Brille.

Das Gelenk des Brillengestells basiert auf einem ähnlichen Mechanismus, wie dem "Knackfrosch-Effekt". Hier ist eine Schnappfeder zwischen dem frontalen Brillengestell und dem Brillenbügel derart integriert (bzw. hereingedrückt), dass das frontale Brillengestell und der Brillenbügel einen nahezu rechten Winkel bilden. Wird nun der Brillenbügel in Richtung des frontalen Brillengestells gebogen, so springt er an einem bestimmten Punkt um und bleibt in dieser zusammengeklappten Position. Beim Aufklappen des Brillenbügels ist zunächst ebenfalls ein gewisser Widerstand zu überwinden. Erreicht man jedoch einen bestimmten Punkt, so klappt der Brillenbügel vollständig auf und bleibt in der aufgeklappten Position.

In einer bevorzugten Ausführungsform der Erfindung ist das Brillengestell aus einem Stück gefertigt. Dies hat den Vorteil, dass das ganze Brillengestell aus einem Metallblech oder einer Karbonplatte hergestellt werden kann, das durch Ausstanzen, Ätzen, Erodieren oder Prägen des Gelenks gefertigt werden kann.

In einer weiteren bevorzugten Ausführungsform der Erfindung ist der Brillenbügel abnehmbar. Dies hat den Vorteil, dass die Brille für den Transport sehr flach zerlegt werden kann. Auch ist somit der Austausch von verschiedenen frontalen Brillenfassungen oder verschiedenen Brillenbügeln möglich. So kann auf modische Veränderungen schnell reagiert werden oder die Korrekturgläser gegen getönte Gläser ausgetauscht werden. Insbesondere für Korrekturgläser ist es dabei wichtig, dass die frontale Brillenfassung derart geöffnet werden kann, dass die Brillengläser leicht ausgetauscht werden können. Es ist aber auch möglich, die Brillenfassung in einer geschlossenen Variante herzustellen. Hierbei würden die Gläser in die Brillenfassung hereingedrückt.

Der Brillenbügel besteht bevorzugt aus einem flachen Streifen, der sich an einem Ende in zwei sich voneinander abgewinkelte Streifen teilt, wobei die beiden abgewinkelten Streifen an ihren Enden wieder verbunden sind.

Beim Zusammenfügen der beiden abgewinkelten Streifen ist die jeweils innere Seite, länger als die äußere Seite und somit entsteht ein Materialüberschuss, der bei Deformation durch Druck zum "Knackfrosch-Effekt" führt.

Die voneinander abgewinkelten Streifen weisen vorzugsweise an ihren inneren Seiten Vorrichtungen auf, durch die sie miteinander verbindbar sind. Hier ist es möglich, die verschiedensten Vorrichtungen zu verwenden, um die beiden Enden der abgewinkelten Streifen wieder miteinander zu verbinden. Es können Hacken sein, die ein ineinander verhaken der beiden Enden ermöglichen. Es ist jedoch auch möglich sie miteinander zu verschrauben, vernieten, verschweißen, verkleben oder durch einen Druckknopf miteinander zu verbinden.

Die Vorrichtung verhindert vorzugsweise ein Verschieben der Enden der abgewinkelten Streifen in zwei Raumrichtungen. Dazu besitzen die abgewinkelten Streifen Vorrichtungen, die ineinander greifen und nur nach einer Raumrichtung geöffnet werden können. Ein Verschieben in diese Raumrichtung kann dann, wie oben beschrieben, durch eine Verbindungsklammer verhindert werden.

Bevorzugt ist die Vorrichtung eine schwalbenschwanzähnliche Verbindung. Dies hat den Vorteil, dass die Verbindung sehr flach gehalten werden kann.

Zur Sicherung der Verbindung kann auch eine verbindungsklammer über die beiden Enden geschoben werden, die zudem noch die Verbindung zur frontalen Brillenfassung ermöglicht.

Damit ein Umklappen der Brillenbügel an einem bestimmten Punkt möglich ist, müss das Gelenk des Brillegestells aus einem Material sein, das in sich stabil ist, jedoch eine gewisse Flexibilität hat und gewisse Spannungen im Material aushält. Das Brillengestell ist daher bevorzugt aus Metall, Papier, Pappe, Kohlefaser und/oder Kunststoff.

Weiterhin wird die Aufgabe der Erfindung durch ein Verfahren zur Herstellung eines Brillengestells gelöst, wobei in einem ersten Schritt das Brillengestell aus einem flächigen Material ausgestanzt, ausgelasert, auserodiert oder ausgeätzt wird und in einem zweiten Schritt durch punktuellen Druck derart verformt wird, dass ein Gelenk entsteht. Aus Platten werden dabei Zuschnitte gefertigt, die dann durch eine Verformung unter Druck das gewünschte Brillengestell ergeben. Dadurch können die verschiedensten Formen von Brillengestellen ausgeschnitten werden.

In einer bevorzugten Ausführungsform der Erfindung wählt man als flächiges Material Metall oder Kunststoff aus. Es ist jedoch auch möglich, andere Materialien, wie z.B. Papier, Pappe oder Kohlenfaser zu verwenden. Grundsätzlich kann jedes Material verwendet werden, dass die nötige Flexibilität für die Verformung des Gelenks aufweist. Die Verwendung von Metall oder Kunststoffen hat den Vorteil, dass diese Materialien unter Druck verformbar sind. Durch den punktuellen Druck wird das Gelenk des Brillengestells geformt (flächenvertieft). Dazu wird an einer definierten Stelle des Brillenbügels punktueller Druck auf das Material ausgeübt. An dieser Stelle wird das Material verflacht, und verdrängt somit das angrenzende Material, was dazu führt, dass die parallel liegenden Blechstreifen am oberen und unteren Teil des Bügels aufgespreizt werden. Dies geschieht an zwei sich gegenüberliegenden Stellen, was dazu führt, dass sich in der Mitte der Laschen eine bauchige Ausstülpung (Materialüberschuss) ergibt. Die innere Seite des Gelenks wird dabei stärker aus der Gelenkebene herausgedrückt als die äußere Seite, so dass sich ein Materialüberschuss in.der Mitte der.Gelenkfläche bildet. Eine Bewegung des Materialüberschusses durch die Gelenkebene führt dann zum Wechsel des Materialüberschusses von der einen Gelenkebene zur anderen und somit zu einer Änderung des Winkels zwischen den dem Brillenbügel und der Brillenfassung.

Man verwendet bevorzugt ein flächiges Material mit einer Stärke von 0,1 bis 5 mm und besonders bevorzugt von 0,4 bis 0,8 mm. Dadurch ist es möglich ein stabiles Brillengestell herzustellen, das dennoch Verformungen am Gelenk ermöglicht. Es ist jedoch auch möglich, das flächige Material im Bereich der Brillenfassung stärker auszubilden, um eine höhere Festigkeit zu erreichen und in dem Bereichen aus dem das Gelenk entsteht dünner auszubilden, um eine höhere Flexibilität zu erzielen.

In einer weiteren bevorzugten Ausführungsform der Erfindung wird in einem weiteren Arbeitsschritt die Oberfläche des Brillengestells beschichtet, lackiert, ätzt und/oder graviert. Auf diese Weise ist es möglich, z.B. durch eine galvanische Beschichtung oder eine Lackierung das Brillengestell vor Korrosion zu schützen oder optisch zu verändern.

In einem weiteren Arbeitsschritt bringt man vorzugsweise Kunststoff-, Silikon-, Horn- oder Gummipolster am Brillensteg und/oder an den Enden der Brillenbügel an. Dies ermöglicht eine reibungs- und druckfreie Auflage der Brille beim Tragen und erhöht somit den Tragekomfort.

Des Weiteren wird die Aufgabe der vorliegenden Erfindung durch eine Verwendung von Schnappfedern mit Knackfrosch-Effekt als Gelenk eines Brillengestells gelöst.

Im Folgenden wird die Erfindung anhand von Zeichnungen näher beschrieben. Im Einzelnen zeigt
- Figur 1: einen Ausschnitt des Brillengestells mit ausgeklapptem Brillenbügel;
- Figur 2: einen weiteren Ausschnitt des Brillengestells mit ausgeklapptem Brillenbügel;
- Figur 3: einen Ausschnitt des Brillengestells mit zusammengeklapptem Brillenbügel;
- Figur 4: einen Ausschnitt des Brillengestells mit zusammengeklapptem Brillenbügel;
- Figur 5a: einen Brillenbügel;
- Figur 5b: die Verbindungsstelle der beiden En den des Brillenbügels;
- Figur 6: einen Ausschnitt eins Brillengestells, das aus einem Teil besteht;
- Figur 7: ein Ausschnitt eines Brillengestells mit abgewinkelten Streifen;
- Figur 8: einen Ausschnitt eines Brillengestells beidem die Enden der abgewinkelten Streifen zusammengedrückt sind;
- Figur 9: einen Ausschnitt eins Brillengestells aus mehreren Teilen mit geöffnetem Brillenbügel;
- Figur 10: einen Ausschnitt eines Brillengestells mit einem Gelenk aus einer Fläche und
- Figuren 11a bis 11n: verschiedene Brillenbügel mit Gelenk und Schwalbenschwanzverbindung.

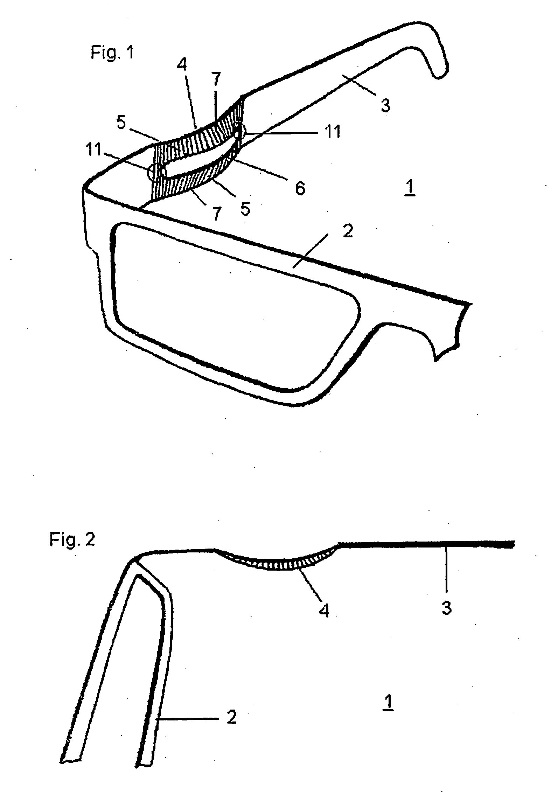

Figur 1 und Figur 2 zeigen einen Ausschnitt des Brillengestells 1. Das Brillengestell 1 besteht aus der'frontalen Brillenfassung 2, dem Brillenbügel 3 und dem Gelenk 4. Das Gelenk 4 besteht aus zwei Streifen 5, durch die die Brillenbügel 3 mit der frontalen Brillenfassung 2 verbunden sind.

Die Streifen 5 sind auf ihrer inneren Seite 6 länger als auf ihrer äußeren Seite 7, so dass sie sich aus der Ebene, die durch den Brillenbügel 3 gebildet wird herausbiegen (Materialüberschuss). Der Materialüberschuss wird dabei durch punktuellen Druck auf die Verformungspunkte 11 erzeugt.

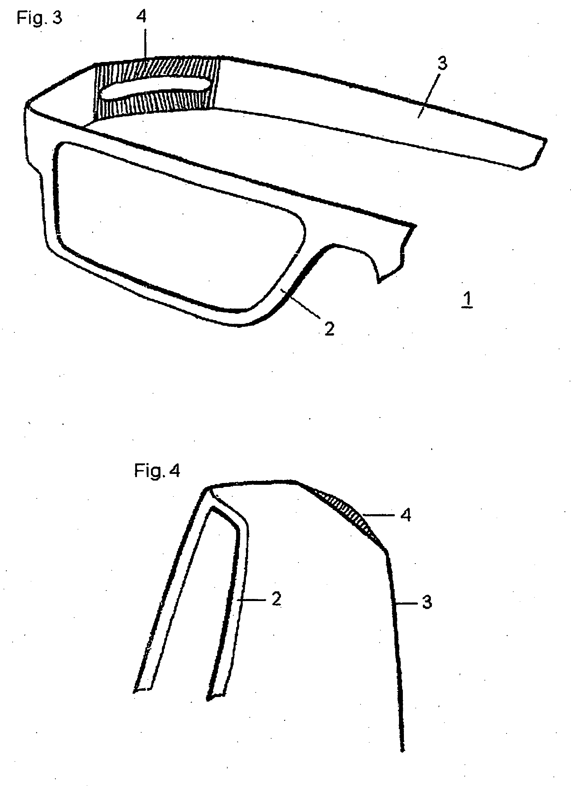

Werden die Brillenbügel 3 in Richtung der frontalen Brillenfassung 2 gedrückt, dann wird der Materialüberschuss, der längeren inneren Seite 6 auf die andere Seite des Brillenbügels 3 gedrückt. Diese ist in den Figuren 3 und 4 dargestellt. Die Figuren 3 und 4 zeigen das Brillengestell 1 in einer zusammengeklappten Position.

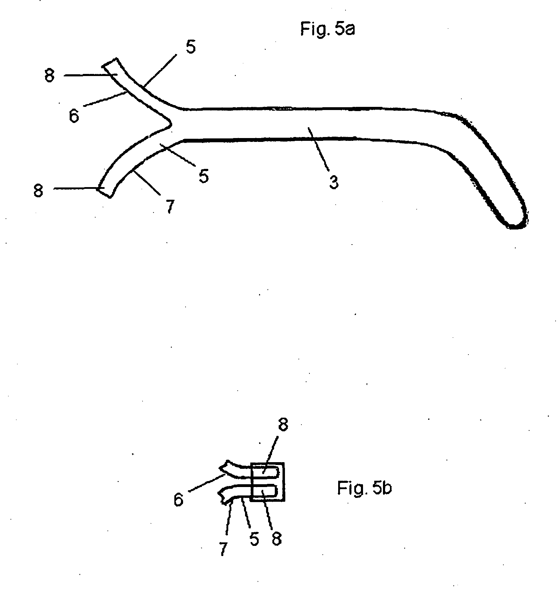

Die Figur 5a zeigt einen Brillenbügel 3 mit dem Gelenk 4. Das Gelenk 4 besteht aus zwei Streifen 5, die sich von dem Brillenbügel 3 abgewinkelt erstrecken. Durch die Biegung der Streifen 5 ist ihre innere Seite 6 länger als ihre äußere Seite 7.

Werden die beiden Streifen 5 an ihren Enden 8 zusammen befestigt; wie in Figur 5b dargestellt, so entsteht eine Spannung in den Streifen 5. Diese Spannung führt dazu, dass die inneren Seiten 6 der Streifen 5 aus der durch den Brillenbügel 3 gebildeten Ebene herausgedrückt werden. Der Materialüberschuss, der durch die inneren Seiten 6 der Streifen 5 gebildet wird, wird somit aus der durch die durch den Brillenbügel 3 gebildete Ebene herausgedrückt. Ist der Brillenbügel 3, wie in den Figuren 1 und 2 dargestellt, abgewinkelt, befindet sich der Materialüberschuss auf der eine Seite des Brillenbügels 3 und werden die Brillenbügel 3 wie in den Figuren 3 und 4 dargestellt zusammengeklappt, dann bewegt sich der Materialüberschuss auf die andere Seite des Brillenbügels 3.

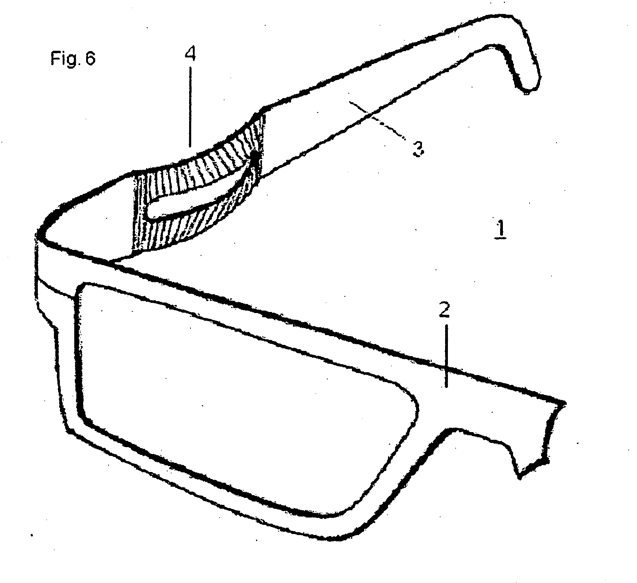

Die Figur 6 zeigt eine weitere Ausführungsform der vorliegenden Erfindung, bei der das Brillengestell 1 aus einem Stück gefertigt ist. Hierbei wird das Gelenk 4 durch Pressen beziehungsweise Ausstanzen hergestellt, indem die innere Seite 6 aus der Ebene herausgedrückt wird.

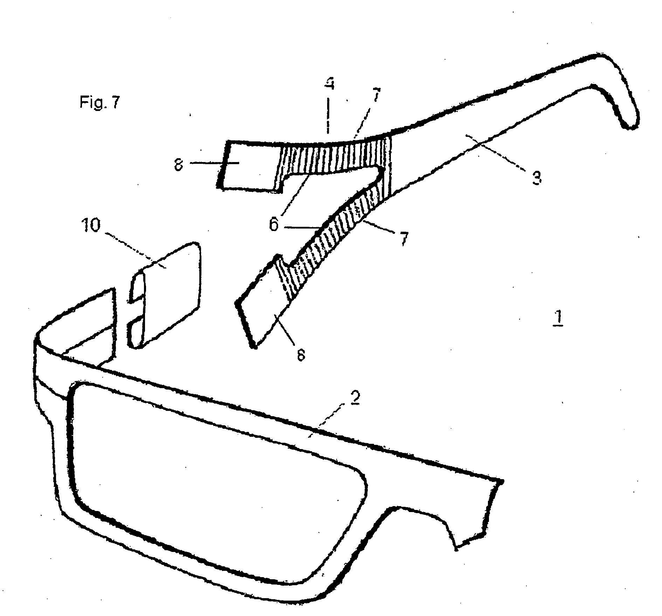

Die Figur 7 zeigt einen Ausschnitt aus dem Brillengestell 1 der vorliegenden Erfindung in einer Explosionszeichnung. Die frontale Brillenfassung 2 ist in dieser Ausführungsform durch eine Verbindungsklammer 10 mit dem Brillenbügel 3 verbunden. Ein Ende des Brillenbügels 3 ist ein Gelenk 4, das durch zwei voneinander abgewinkelten Streifen 5 gebildet wird, deren innere Seite 6 länger ist als deren äußere Seite 7.

Die innere Seite 6 und die äußere Seite 7 werden an ihren Enden 8 durch eine Verbindungsklammer 10 zusammengedrückt. Die Verbindungsklammer 10 ist auf eine Weise ausgestaltet, die eine sichere Verbindung zwischen den Enden 8 und der frontalen Brillenfassung 2 ermöglicht.

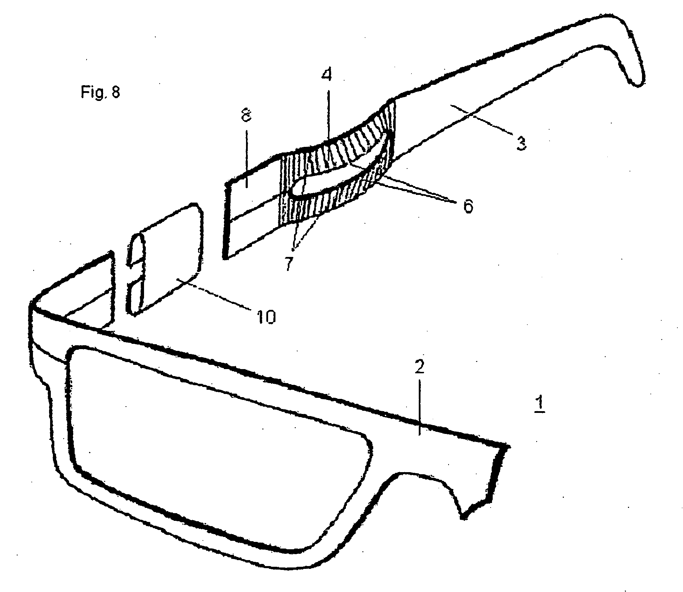

Die Figur 8 zeigt die gleiche Ausführungsform wie die Figur 7, hier sind jedoch die Enden 8 der abgewinkelten Streifen 5 in einer zusammengedrückten Position dargestellt. Durch die längere innere Seite 6 der abgewinkelten Streifen 5 bildet sich so ein Materialüberschuss, der herausgedrückt wird.

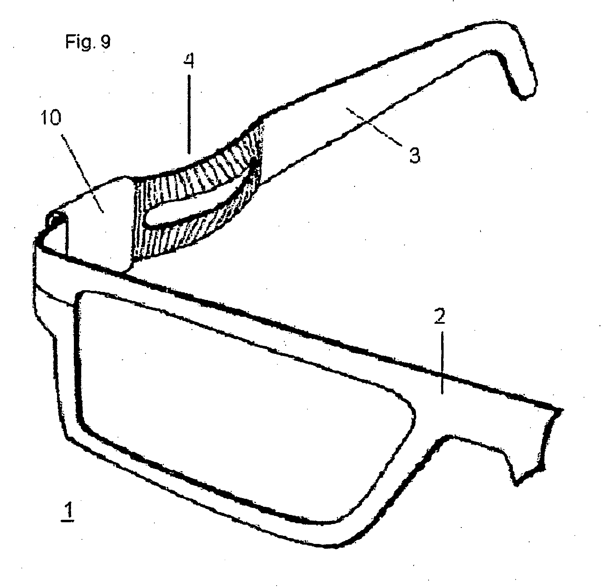

Die Figur 9 zeigt die in Figur 7 und 8 dargestellte Ausführungsform in einer montierten Form. Das Gelenk 4 wird dabei durch den Materialüberschuss in eine Richtung gewölbt.

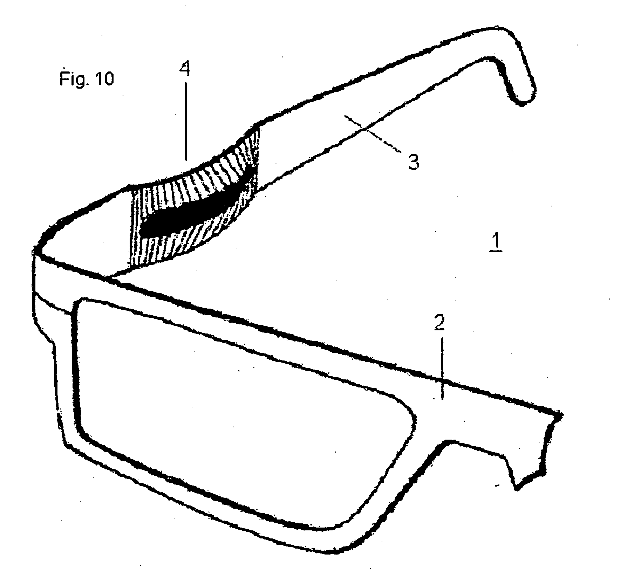

Die Figur 10 zeigt eine weitere Ausführungsform der vorliegenden Erfindung, bei der das Gelenk 4 kein Loch aufweist, sondern aus einer Fläche besteht, in die ein Materialüberschuss geprägt wurde.

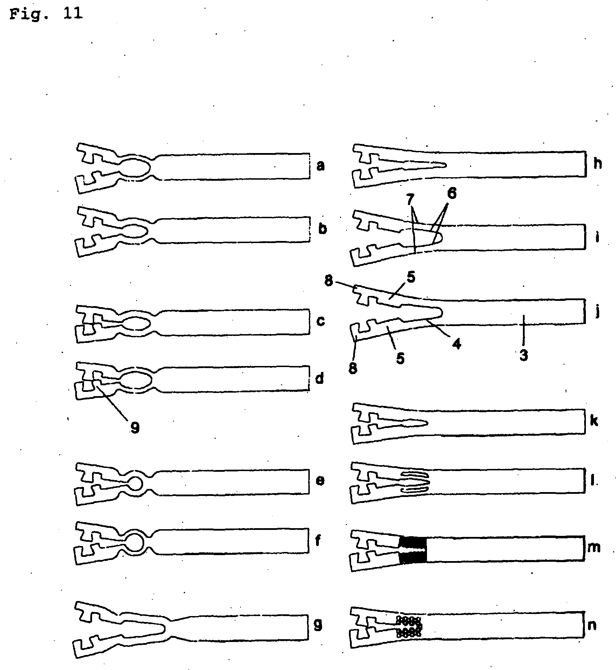

Die Figuren 11a bis 11n zeigen eine Auswahl verschiedener möglicher Ausführungsformen des Brillenbügels 3. Die Brillenbügel 3 haben jeweils unterschiedlich ausgeprägte voneinander abgewinkelte Streifen 5 die das Gelenk 4 bilden. Zudem weisen die abgewinkelten Streifen 5 auf ihrer inneren Seite 6 eine Vorrichtung 9 auf, durch die sie miteinander verbunden werden können.

In der Figur 11 sind die Enden 8 der abgewinkelten Streifen 5 als Schwalbenschwanzverbindung ausgebildet. Es sind jedoch auch andere Vorrichtungen 9 zur Verbindung der beiden abgewinkelten Streifen 5 möglich.

In Figur 11m ist die innere Seite 6 schleifenförmig geformt, was eine größere Länge der inneren Seite 6 im Vergleich mit der äußeren Seite 7 bedeuten.

### Bezugszeichenliste:

- 1: Brillengestell
- 2: Brillenfassung
- 3: Brillenbügel
- 4: Gelenk
- 5: abgewinkelter Streifen
- 6: innere Seite
- 7: äußere Seite
- 8: Ende
- 9: Vorrichtung
- 10: Verbindungsklammer
- 11: Verformungspunkt

## Patentansprüche

1. Brillengestell (1) mit aus Schnappfedern mit Knackfroscheffekt gebildeten Gelenken (4) zur Anwinkelung der Brillenbügel (3), wobei die Gelenke (4) in der Mitte der Gelenkflächen einen Materialüberschuss aufweisen, der je nach Position des Materialüberschusses zu einer Biegung der Gelenke (4) führt oder die Gelenke (4) in einer Ebene hält, **dadurch gekennzeichnet, dass** die Brillenbügel (3) beim Zusammenklappen ab einer Position mit einem geringeren Bügelaufschlagwinkel plötzlich in eine zusammengeklappte Position umspringen und die Brillenbügel (3) beim Aufklappen ab einer bestimmten Position plötzlich in eine Position mit einem maximalen Bügelaufschlagwinkel Vollständig aufklappen.

2. Brillengestell (1) nach Anspruch 1, **dadurch gekennzeichnet, dass** der Brillenbügel (3) an einem Ende eine Fläche aufweist, die einen Materialüberschuss auf einer Seite der Fläche aufweist.

3. Brillengestell (1) nach einem der Ansprüche 1 oder 2, **dadurch gekennzeichnet, dass** das Brillengestell (1) aus einem Stück gefertigt ist.

4. Brillengestell (1) nach einem der Ansprüche 1 der 2, **dadurch gekennzeichnet, dass** der Brillenbügel (3) abnehmbar ausgestaltet ist.

5. Brillengestell (1) nach Anspruch 4, **dadurch gekennzeichnet, dass** der Brillenbügel (3) aus einem flachen Streifen besteht, der sich an einem Ende in zwei sich voneinander abgewinkelten Streifen (5) teilt, wobei die beiden abgewinkelten Streifen (5) an ihren Enden (8) wieder verbunden sind.

6. Brillengestell (1) nach einem der Ansprüche 4 oder 5, **dadurch gekennzeichnet, dass** die voneinander abgewinkelten Streifen (5) an ihren inneren Seiten (6) Vorrichtungen (9) aufweisen, durch die sie miteinander verbindbar sind.

7. Brillengestell (1) nach einem der Ansprüche 4 bis 6, **dadurch gekennzeichnet, dass** die Vorrichtung (9) ein Verschieben der Enden (8) der abgewinkelten Streifen (5) in zwei Raumrichtungen verhindert.

8. Brillengestell (1) nach einem der Ansprüche 4 bis 7, **dadurch gekennzeichnet, dass** die Vorrichtung (9) eine schwalbenschwanzähnliche Verbindung ist.

9. Brillengestell (1) nach einem der Ansprüche 1 bis 8, **dadurch gekennzeichnet, dass** es aus Metall, Papier, pappe, Kohlefaser und/oder Kunststoff ist.

10. Verfahren zur Herstellung eines Brillengestells (1) nach einem der Ansprüche 1 bis 9, **dadurch gekennzeichnet, dass** in einem ersten Schritt das Brillengestell (1) aus einem flächigen Material ausgestanzt, ausgeläsert, auserodiert oder ausgeätzt wird und in einem zweiten Schritt durch punktuellen Druck derart verformt wird, dass ein Gelenk (4) entsteht.

11. Verfahren nach Anspruch 10, **dadurch gekennzeichnet, dass** man als flächiges Material Metall oder Kunststoff auswählt.

12. Verfahren nach einem der Ansprüche 10 oder 11, **dadurch gekennzeichnet, dass** man ein flächiges Material mit einer Stärke von 0, 5 bis 5 mm verwendet.

13. Verfahren nach einem der Ansprüche 10 bis 12, **dadurch gekennzeichnet, dass** man ein flächiges Material mit. einer Stärke von 0,4 bis 0,8 mm verwendet.

14. Verfahren nach einem der Ansprüche 10 bis 13,
**dadurch gekennzeichnet, dass** man die Oberfläche des Brillengestells (1) beschichtet, lackiert, ätzt und/oder graviert.

15. Verfahren nach einem der Ansprüche 10 bis 14, **dadurch gekennzeichnet, dass** man Kunststoff-, Silikon-, Horn- oder Gummipolster am Brillensteg und/oder an den Enden der Brillenbügel (3) anbringt.

16. Verwendung von Schnappfedern mit Knackfrosch-Effekt als Gelenk (4) eines Brillengestells (1).

## Claims

1. An eyeglass frame (1) with hinges (4) formed by snap springs having a "snap frog effect" for bending of the eyeglass temples (3), wherein the hinges in the middle of the hinge surface comprise excess material, which, depending on the position of the excess material, leads to a bending of the hinge (4) or holds the hinge (4) in one plane, **characterized in that**, the eyeglass temples (3) on closing at one position having a smaller temple contact angle abruptly flip into a closed position und that the eyeglass temples (3) on opening at a certain position abruptly open into a position with a maximum temple contact angle.

2. The eyeglass frame (1) according to claim 1, further **characterized in that**, at one end, the eyeglass temple (3) has a surface that has excess material on one side of the surface.

3. The eyeglass frame (1) according to one of claims 1 or 2, further **characterized in that** the eyeglass frame (1) is fabricated from one piece.

4. The eyeglass frame (1) according to one of claims 1 or 2, further **characterized in that** the eyeglass temple (3) is designed to be removable.

5. The eyeglass frame (1) according to claim 4, further **characterized in that** the eyeglass temple (3) consists of a flat strip, which is divided at one end into two oppositely angled strips (5), the two angled strips (5) being rejoined at their ends (8).

6. The eyeglass frame (1) according to one of claims 4 or 5, further **characterized in that** the oppositely angled strips (5) have, on their inner sides (6), mechanisms (9) by means of which they can be joined to each other.

7. The eyeglass frame (1) according to one claims 4 to 6, further **characterized in that** the mechanism (9) prevents a displacement of the ends (8) of the angled strips (5) in two spatial directions.

8. The eyeglass frame (1) according to one of claims 4 to 7, further **characterized in that** the mechanism (9) is a dovetail-like linkage.

9. The eyeglass frame (1) according to one of claims 1 to 8, further **characterized in that** it is made of metal, paper, cardboard, carbon fiber, and/or plastic.

10. A process for the production of an eyeglass frame (1) according to one of the claims 1 to 9, **characterized in that**, in a first step, the eyeglass frame (1) is punched out, laser-cut, eroded out, or etched out of a flat material, and, in a second step, is deformed through the application of point pressure in such a way that a hinge (4) is formed.

11. The process according to claim 10, further **characterized in that**, as flat material, metal or plastic is selected.

12. The process according to one of claims 10 or 11, further **characterized in that** a flat material with a thickness of 0.5 to 5 mm is used.

13. The process according to one of claims 10 to 12, further **characterized in that** a flat material with a thickness of 0.4 to 0.8 mm is used.

14. The process according to one of claims 10 to 13, further **characterized in that**, the surface of the eyeglass frame (1) is coated, lacquered, etched, and/or engraved.

15. The process according to one of claims 10 to 14, further **characterized in that** plastic, silicone, horn, or rubber pads are placed on the eyeglass bridge and/or at the end of the eyeglass temples (3).

16. A use of snap springs with a "snap frog effect" as a hinge (4) of an eyeglass frame (1).

## Revendications

1. Monture de lunettes (1) pourvue d'articulations (4) formées à partir de ressorts à déclic avec effet « clicker » pour plier les branches de lunettes (3), les articulations (4) présentant, au centre des surfaces d'articulation, un excédent de matière qui, selon la position de l'excédent de matière, entraîne une flexion des articulations (4) ou maintient les articulations (4) dans un plan, **caractérisée en ce que** les branches de lunettes (3), lorsqu'on les replie, passent subitement dans une position repliée à partir d'une position avec un plus petit angle de dépliage des branches et les branches de lunettes (3), lors du dépliage, se déplient subitement entièrement dans une position avec un angle maximal de dépliage des branches à partir d'une position déterminée.

2. Monture de lunettes (1) selon la revendication 1, **caractérisée en ce que** la branche de lunettes (3) présente, en une extrémité, une surface qui présente un excédent de matière sur un côté de la surface.

3. Monture de lunettes (1) selon l'une des revendications 1 ou 2, **caractérisée en ce que** la monture de lunettes (1) est réalisée d'une seule pièce.

4. Monture de lunettes (1) selon l'une des revendications 1 ou 2, **caractérisée en ce que** la branche de lunettes (3) est réalisée de manière amovible.

5. Monture de lunettes (1) selon la revendication 4, **caractérisée en ce que** la branche de lunettes (3) se compose d'une bande plate qui, en une extrémité, se divise en deux bandes (5) qui forment un angle entre elles, les deux bandes (5) qui forment un angle étant de nouveau reliées en leurs extrémités (8).

6. Monture de lunettes (1) selon l'une des revendications 4 ou 5, **caractérisée en ce que** les bandes (5) qui forment un angle entre elles présentent, sur leurs côtés intérieurs (6), des dispositifs (9) permettant de les relier entre elles.

7. Monture de lunettes (1) selon l'une des revendications 4 à 6, **caractérisée en ce que** le dispositif (9) empêche les extrémités (8) des bandes (5) qui forment un angle de se déplacer dans deux directions de l'espace.

8. Monture de lunettes (1) selon l'une des revendications 4 à 7, **caractérisée en ce que** le dispositif (9) est une liaison de type queue d'aronde.

9. Monture de lunettes (1) selon l'une des revendications 1 à 8, **caractérisée en ce que** qu'elle est en métal, en papier, en carton, en fibre de carbone et/ou en matière plastique.

10. Procédé pour fabriquer une monture de lunettes (1) selon l'une des revendications 1 à 9, **caractérisé en ce que** la monture de lunettes (1), dans une première étape, est découpée au poinçon, au laser, par érosion ou par attaque chimique dans une matière plane et, dans une deuxième étape, subit une déformation par pression ponctuelle telle qu'il se forme une articulation (4).

11. Procédé selon la revendication 10, **caractérisé en ce qu'**on choisit, en tant que matière plane, du métal ou de la matière plastique.

12. Procédé selon l'une des revendications 10 ou 11, **caractérisé en ce qu'**on utilise une matière plane d'une épaisseur de 0,5 à 5 mm.

13. Procédé selon l'une des revendications 10 à 12, **caractérisé en ce qu'**on utilise une matière plane d'une épaisseur de 0,4 à 0,8 mm.

14. Procédé selon l'une des revendications 10 à 13, **caractérisé en ce qu'**on enduit, laque, attaque chimiquement et/ou grave la surface de la monture de lunettes (1).

15. Procédé selon l'une des revendications 10 à 14, **caractérisé en ce que** l'on monte des protections en matière plastique, en silicone, en corne ou en caoutchouc sur la barre du nez de lunettes et/ou aux extrémités des branches de lunettes (3).

16. Utilisation de ressorts à déclic avec effet « clicker » en tant qu'articulation (4) d'une monture de lunettes (1).
